# EUROPÄISCHE PATENTSCHRIFT

(11) **EP 1 569 810 B1**
(45) Veröffentlichungstag und Bekanntmachung des Hinweises auf die Patenterteilung: **30.08.2006**
(21) Anmeldenummer: 04766859.5
(22) Anmeldetag: 28.09.2004
(51) Int. Cl.: B60G 17/08, F16F 9/512

(54) **VERFAHREN ZUR SCHWINGUNGSDÄMPFUNG**
VIBRATION DAMPING METHOD
PROCEDE D'AMORTISSEMENT DE VIBRATIONS

(30) Priorität: 10.10.2003 DE 10347219
(43) Veröffentlichungstag der Anmeldung: 07.09.2005
(73) Patentinhaber: Bayerische Motoren Werke Aktiengesellschaft, 80809 München (DE)
(72) Erfinder: PFAFFENZELLER, Peter, 81543 München (DE); STEIN, Heinrich, 82275 Emmering (DE); HAUKE, Mirco, 81379 München (DE); STROBL, Hubert, 82205 Gilching (DE)
(86) Internationale Anmeldenummer: PCT/EP2004/052337
(87) Internationale Veröffentlichungsnummer: WO 2005/037581

(56) Entgegenhaltungen:
- DE-A- 3 729 187
- DE-A- 19 921 125
- DE-U- 9 402 417
- FR-A- 2 041 630
- US-A- 3 389 766
- US-A- 3 704 767
- US-A- 4 474 271
- US-A- 5 107 969
- US-A- 5 509 512
- US-A1- 2003 160 369

## Beschreibung

Die Erfindung betrifft ein Verfahren zur Schwingungsdämpfung an einer Kraftfahrzeugradaufhängung nach dem Oberbegriff des ersten Anspruchs.

Die DE 37 29 187 C2 beschreibt einen Schwingungsdämpfer, bei dem die Dämpferkräfte für beide Bewegungsrichtungen, beliebig und unabhängig voneinander, auch während einer Ein- bzw. Ausfederbewegung einstellbar sind. Ein solcher Schwingungsdämpfer besitzt mindestens zwei durch einen Kolben mit Hauptüberströmventilen getrennte Arbeitskammern. Am Kolben ist eine Kolbenstange befestigt, die durch eine der Arbeitskammern geführt ist. Zusätzlich zu den Hauptüberströmventilen sind die Arbeitskammern durch eine in ihrem Öffnungsquerschnitt verstellbare Überströmöffnung verbunden. Ein Steuerglied, das in einer Ruhelage gehalten wird, in der die Größe der Überströmöffnung maximal ist, wird so angesteuert, dass bei Bedarf die Größe der Überströmöffnung verringert und damit die vom Schwingungsdämpfer bewirkte Dämpfung vergrößert wird. Das Steuerglied kann zum Beispiel elektrisch, magnetisch, hydraulisch oder durch Trägheitskräfte betätigt werden. In der DE 199 21 125 A1 wird eine trägheitskraftgesteuerte Verstelleinrichtung für den Öffnungsquerschnitt eines Überströmkanals zwischen den Arbeitskammern beschrieben.

Bei der Dämpferkraftabstimmung von Kraftfahrzeugen wird im Hinblick auf Komfort und Fahrsicherheit die Dämpferkraftkennlinie bis ca. 2 m/s Kolbengeschwindigkeit betrachtet. Für die Dämpferkraftkennlinie größer 2 m/s ergibt sich in der Regel automatisch ein leicht progressiver Anstieg aus der gewählten Kolben/Ventilkombination. Dies wird aber üblicherweise bei der Fahrwerksauslegung nicht gesondert betrachtet.

Dies ergibt sich auch aus dem Patent FR 2 041 630, bei dem Kolbengeschwindigkeiten bis 1,6 m/s betrachtet werden. Hier wird ein mindestens zweistufiger Verlauf der Dämpfungskraft mit stark ansteigenden, dann degressiv abfallenden Stufen in Kolbengeschwindigkeitszonen I und III beschrieben. Dazwischen, in Kolbengeschwindigkeitszonen II und IV, sind diese Stufen miteinander im wesentlichen linear verbunden. In einer Zone V ist der Beginn einer weiteren Stufe angedeutet gezeichnet, aber ab im wesentlichen 1,6 m/s nicht mehr weitergeführt, da dieser Bereich kräftemäßig nicht mehr komfortrelevant ist. Hier wird ein Schwingungsdämpfer bereitgestellt, der bei seiner Montage einfach auf verschiedene Fahrzeugtypen und/oder Dämpfungscharakteristika eingestellt werden kann. Dabei geht es darum, im Komfortbereich, zum Beispiel für Stadtverkehr bzw. Landstraßenverkehr, verschiedene Dämpfungscharakteristika bereitzustellen, was den nicht linearen Kennlinienverlauf im Komfortbereich ergibt.

Bei sehr großen Vertikalgeschwindigkeiten des Rades, viel größer als 2m/s, wie sie zum Beispiel bei Schlagloch- oder Schwellenüberfahrten auftreten, entstehen durch die beschleunigten ungefederten Massen große Belastungen in Karosserie und Fahrwerk im Endanschlagbereich. Die Dämpferkraft für derart große Kolbengeschwindigkeiten ist in üblichen Schwingungsdämpfern zu gering, um die kinetische Energie des beschleunigten Rades genügend abzubauen, was bedeutet, dass die Hauptenergie von der Karosseriestruktur getragen werden muss. Dies bedingt, dass die beteiligten Strukturkomponenten massiv und schwer und damit teuer in der Herstellung sind. Wird die Dämpferkraft des Schwingungsdämpfers insgesamt erhöht, ergibt sich bei einer Vertikalgeschwindigkeit kleiner als 2m/s ein negativer Einfluss auf den Fahrkomfort.

Deshalb ist es Aufgabe der Erfindung, ein Verfahren zur Schwingungsdämpfung an einer Kraftfahrzeugradaufhängung mittels eines hydraulischen Schwingungsdämpfers bereitzustellen, das, ohne Einbußen bei Fahrkomfort und Fahrsicherheit, große Belastungen von Karosserie und Fahrwerk, verursacht durch sehr große Vertikalgeschwindigkeiten des Rades, zum Beispiel bei Schlagloch- oder Schwellenüberfahrten, verhindert.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Bei einem hydraulischen Schwingungsdämpfer für ein Kraftfahrzeug kommt erfindungsgemäß ein Verfahren zur Schwingungsdämpfung an einer Radaufhängung zum Einsatz, das dadurch gekennzeichnet ist, dass die Dämpfungskraft des Schwingungsdämpfers in Abhängigkeit von der Kolbengeschwindigkeit im Bereich einer Kolbengeschwindigkeit von im wesentlichen 0 bis 2 m/s zuerst langsam, im wesentlichen linear, dann ab einer Kolbengeschwindigkeit von im wesentlichen 2 m/s stark progressiv ansteigt.

Das hat den Vorteil, dass der Schwingungsdämpfer, ohne Einbußen bei Fahrkomfort und Fahrsicherheit, große Belastungen von Karosserie und Fahrwerk verhindert, verursacht durch sehr große Vertikalgeschwindigkeiten des Rades, zum Beispiel bei Hindernis- oder Schwellenüberfahrten. Durch das stark progressive Ansteigen der Dämpfungskraft ab einer Kolbengeschwindigkeit von im wesentlichen 2 m/s, baut der Schwingungsdämpfer die Energie großer Vertikalgeschwindigkeiten des Rades schneller ab und verhindert dadurch große Belastungen von Karosserie und Fahrwerk. Die Kolbengeschwindigkeit, ab der ein stark progressiver Anstieg der Dämpfungskraft günstigerweise erfolgen soll, ist definiert durch das Ende des komfortrelevanten Bereichs bei der Fahrwerksauslegung. Nach derzeitiger Auffassung endet der komfortrelevante Bereich für Personenkraftwagen bei einer Kolbengeschwindigkeit von circa 2 m/s.

Über eine geeignete Wahl, Konstruktion und Auslegung von Schwingungsdämpferventilen oder über anderweitige Beeinflussung der hydraulischen Widerstände im Schwingungsdämpfer kann eine solche Kennlinie realisiert werden, die im Kolbengeschwindigkeitsbereich bis zum Ende des komfortrelevanten Bereichs die vom Stand der Technik her bekannten Dämpferkräfte erzeugt. Ab diesem Kolbengeschwindigkeitsbereich wird eine extreme Progression in der Dämpferkraftkennlinie bewirkt, um die beschleunigten Massen stärker abzubremsen. Das bewirkt letztendlich reduzierte Belastungen in Karosserie und Fahrwerk aufgrund geringerer Restenergie im Endanschlagbereich und ermöglicht leichtere und kostengünstigere Karosserie-, Fahrwerks- und Fahrzeugauslegung. Besonders vorteilhaft ist dies insbesondere für Fahrzeuge mit geringen Federwegen, zum Beispiel für Sportfahrwerke mit Tieferlegung. Bei schlechten Straßenverhältnissen wird eine längere Fahrzeuglebensdauer erreicht, bei weniger Beschädigung der Karosseriestruktur.

Bei einer bevorzugten Verfahrensausgestaltung zur Schwingungsdämpfung verläuft die Kennlinie der Dämpfungskraft in Abhängigkeit von der Kolbengeschwindigkeit, im Anschluss an den stark progressiven Anstieg, mit steilerem, im wesentlichen linearem Anstieg weiter.

Noch vorteilhafter ist, wenn im Anschluss an den steileren, im wesentlichen linearen oder im Anschluss an den stark progressiven Anstieg der Kennlinie der Dämpfungskraft in Abhängigkeit von der Kolbengeschwindigkeit, diese dann in einen im wesentlichen linear, leicht ansteigenden Verlauf übergeht.

Ein bevorzugtes Ausführungsbeispiel der Erfindung ist in der nachfolgenden Beschreibung und der zugehörigen Zeichnung näher dargestellt.

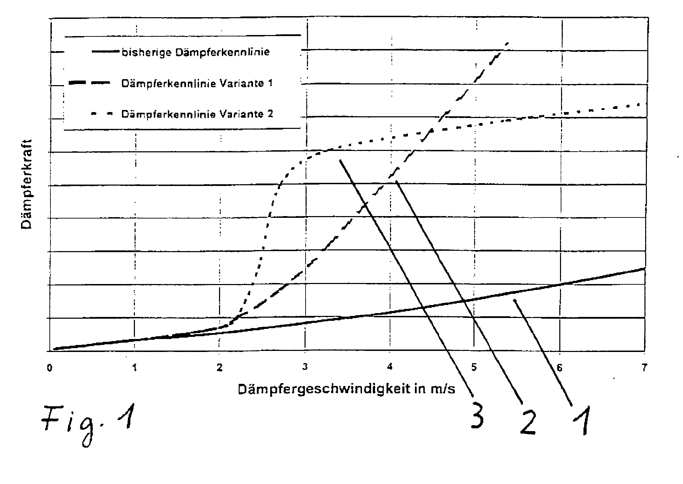

Figur 1 zeigt Kennlinien verschiedener Dämpferkraftverläufe über der Kolbengeschwindigkeit von erfindungsgemäßen Schwingungsdämpfungsverfahren und nach dem Stand der Technik.

Die erste, in Figur 1 mit durchgezogener Linie dargestellte Kennlinienvariante 1 eines Dämpferkraftverlaufs über der Kolbengeschwindigkeit ist durch ein Schwingungsdämpfungsverfahren für eine Radaufhängung eines Kraftfahrzeugs nach dem Stand der Technik erzeugt. Bei der Dämpferkraftabstimmung für Kraftfahrzeuge, insbesondere für Personenkraftwagen, wird im Hinblick auf Komfort und Fahrsicherheit die Dämpferkraftkennlinie bis ca. 2 m/s Kolbengeschwindigkeit betrachtet. Für die Dämpferkraftkennung größer 2 m/s ergibt sich in der Regel nach dem Stand der Technik ein höchstens nur sehr leicht progressiver Anstieg aus den Kolben-*N*entilkombinationen**.** Dies wird üblicherweise bei der Fahrwerksauslegung hingenommen.

Bei sehr großen Vertikalbeschleunigungen des Rades, größer als 2m/s, wie sie zum Beispiel bei Hindernis- oder Schwellenüberfahrten auftreten, entstehen durch die beschleunigten ungefederten Massen extrem große Belastungen in Karosserie und Fahrwerk im Endanschlagbereich.

Dies bedingt eine extrem massive und versteifte und damit schwere und teure Auslegung der beteiligten Strukturkomponenten. Die Dämpferkraft für derart große Beschleunigungen ist in üblichen Dämpfern nach dem Stand der Technik zu gering, was bedeutet, dass die Hauptenergie von der Karosseriestruktur getragen werden muss.

Deshalb schlägt die Erfindung ein Schwingungsdämpfungsverfahren vor, bei dem über eine geeignete Wahl und Konstruktion und Auslegung von Ventilen oder anderweitiger Beeinflussung der hydraulischen Widerstände, eine Kennlinie 2, 3 realisiert wird, die im bisher üblicherweise betrachteten Kolbengeschwindigkeitsbereich bis circa 2 m/s im wesentlichen die bisher üblichen Dämpferkräfte erzeugt. Nur ab Geschwindigkeiten von größer circa 2 m/s wird im Vergleich zur Kennlinie 1 eine extreme Progression in der Dämpferkraftkennlinie 2, 3 erzeugt, um die beschleunigten Massen stärker abzubremsen.

Die beiden Kennlinien 2, gestrichelt dargestellt, und 3, punktiert dargestellt, sind beispielhafte Alternativen für erfindungsgemäße Schwingungsdämpfungsverfahren an einer Kraftfahrzeugradaufhängung mittels eines hydraulischen Schwingungsdämpfers. Sie sind dadurch gekennzeichnet, dass die Dämpfungskraft des Schwingungsdämpfers in Abhängigkeit von der Kolbengeschwindigkeit, im Bereich einer Kolbengeschwindigkeit von im wesentlichen 0 bis 2 m/s, zuerst langsam, im wesentlichen linear, dann, ab einer Kolbengeschwindigkeit von im wesentlichen 2 m/s, stark progressiv ansteigt. Die Kennlinie 2 steigt nach einem progressiven Verlauf bei etwa 2 bis 3 m/s weiter im wesentlichen linear an. Die Kennlinie 3 geht nach einem stark progressiven Anstieg bei etwa 2 bis 2,5 m/s, im Bereich von 2,5 bis 3 m/s wieder in einen leicht ansteigenden, im wesentlichen linearen Verlauf über.

Dadurch werden die Beschleunigungen der Massen und die Belastungen in Karosserie und Fahrwerk reduziert. Eine leichtere und kostengünstigere Karosserie-, Fahrwerks- und Fahrzeugauslegung ist möglich. Dies ist besonders vorteilhaft für Fahrzeuge mit geringen Federwegen, zum Beispiel bei Sportfahrwerken oder bei Fahrzeugen mit sehr wenig Bodenfreiheit. Es wird eine längere Lebensdauer der Fahrzeuge und weniger Beschädigung der Karosseriestruktur bei extrem schlechten Strassen erreicht.

## Patentansprüche

1. Verfahren zur Schwingungsdämpfung an einer Kraftfahrzeugradaufhängung, mittels eines hydraulischen Schwingungsdämpfers, **dadurch gekennzeichnet, dass** dessen Dämpfungskraft in Abhängigkeit von der Kolbengeschwindigkeit im Bereich einer Kolbengeschwindigkeit von im wesentlichen 0 bis 2 m/s zuerst langsam, im wesentlichen linear, dann ab einer Kolbengeschwindigkeit von im wesentlichen 2 m/s stark progressiv ansteigt.

2. Verfahren zur Schwingungsdämpfung nach Anspruch 1, **dadurch gekennzeichnet, dass** im Anschluss an den stark progressiven Anstieg der Kennlinie (2, 3) der Dämpfungskraft in Abhängigkeit von der Kolbengeschwindigkeit, diese mit steilerem, im wesentlichen linearem Anstieg weiterverläuft.

3. Verfahren zur Schwingungsdämpfung nach Anspruch 1 oder 2, **dadurch gekennzeichnet, dass** im Anschluss an den steileren, im wesentlichen linearen oder im Anschluss an den stark progressiven Anstieg der Kennlinie (2, 3) der Dämpfungskraft in Abhängigkeit von der Kolbengeschwindigkeit, diese dann in einen im wesentlichen linear, leicht ansteigenden Verlauf übergeht.

## Claims

1. A method of damping the vibration of a vehicle wheel suspension by means of a hydraulic vibration damper, **characterised in that** the vibration damping force in dependence on the piston speed at speeds in the range from about 0 to 2 m/s first increases slowly in substantially linear manner, followed by a sharply progressive increase above a piston speed of about 2 m/s.

2. A method of vibration damping according to claim 1, **characterised in that** after the sharply progressive increase in the characteristic (2, 3) of the damping force in dependence on the piston speed, the increase in force is substantially linear, though steeper.

3. A method of vibration damping according to claim 1 or 2, **characterised in that** after the steeper, substantially linear or after the sharply progressive increase in the characteristic (2, 3) of the damping force in dependence on the piston speed, the characteristic changes to a substantially linear, gently increasing curve.

## Revendications

1. Procédé pour l'amortissement de vibrations sur une suspension de véhicule automobile au moyen d'un amortisseur de vibrations hydraulique,
**caractérisé en ce que**
son effort d'amortissement, en fonction de la vitesse du piston dans une plage allant essentiellement de 0 à 2 m/s, monte d'abord lentement, essentiellement de manière linéaire, puis de manière fortement progressive à partir d'une vitesse de piston d'essentiellement 2 m/s.

2. Procédé pour l'amortissement de vibrations selon la revendication 1,
**caractérisé en ce que**
suite à la montée fortement progressive de la ligne caractéristique (2, 3) de l'effort d'amortissement en fonction de la vitesse du piston, la ligne continue selon une montée plus abrupte essentiellement linéaire.

3. Procédé pour l'amortissement de vibrations selon la revendication 1 ou 2,
**caractérisé en ce que**
suite à la montée plus abrupte essentiellement linéaire ou suite à la montée fortement progressive de la ligne caractéristique (2, 3) de l'effort d'amortissement en fonction de la vitesse du piston, celle-ci passe à un tracé essentiellement linéaire à progression légère.
